# EUROPEAN PATENT APPLICATION

(11) **EP 3 403 876 A1**
(43) Date of publication of application: **21.11.2018**
(21) Application number: 18172227.3
(22) Date of filing: 15.05.2018
(51) Int. Cl.: B60P 3/07, B60L 11/00

(54) **COMMERCIAL VAN**

(30) Priority: 16.05.2017 IT 201700053004
(71) Applicant: Robert Bosch GmbH, 70442 Stuttgart (DE)
(72) Inventor: Diaferia, Antonio, 70033 Corato, Bari (IT); Medoro, Nello, 76015 Trinitapoli (IT)

(57) **Abstract**

A commercial van is formed by a first vehicle (2) provided with an internal-combustion operating engine (8) and a tank for containing a fuel and by a second vehicle (10) provided with an electric operating motor (14) and a storage compartment (17) for at least one product; a lifting device (18) allowing the second vehicle (10) to drive up onto/down from a loading platform (4) of the first vehicle (2).

## Description

The present invention relates to a commercial van.

In particular, the present invention relates to a commercial van of the type comprising a support chassis, a driving cab for a driver, at least storage compartment for at least one product, and an internal-combustion engine or an electric motor for moving the said commercial van.

Commercial vans of the type described above have a number of drawbacks in particular due to the fact that commercial vans provided with internal-combustion engines, while having sufficient autonomy to perform the journeys between cities which are relatively far from each other, are unable to access the more central zones of numerous cities owing to the existing anti-pollution regulations, while commercial vans provided with electric motors, although being able to access the more central zones of the cities, have an insufficient autonomony to perform the journeys between cities which are relatively far from each other.

The object of the present invention is to provide a commercial van which does not have the aforementioned drawbacks and which is simple and low-cost to produce. According to the present invention a commercial van as claimed in the accompanying claims is provided.

The present invention will now be described with reference to the accompanying drawings which illustrate a non-limiting example of embodiment thereof, in which:

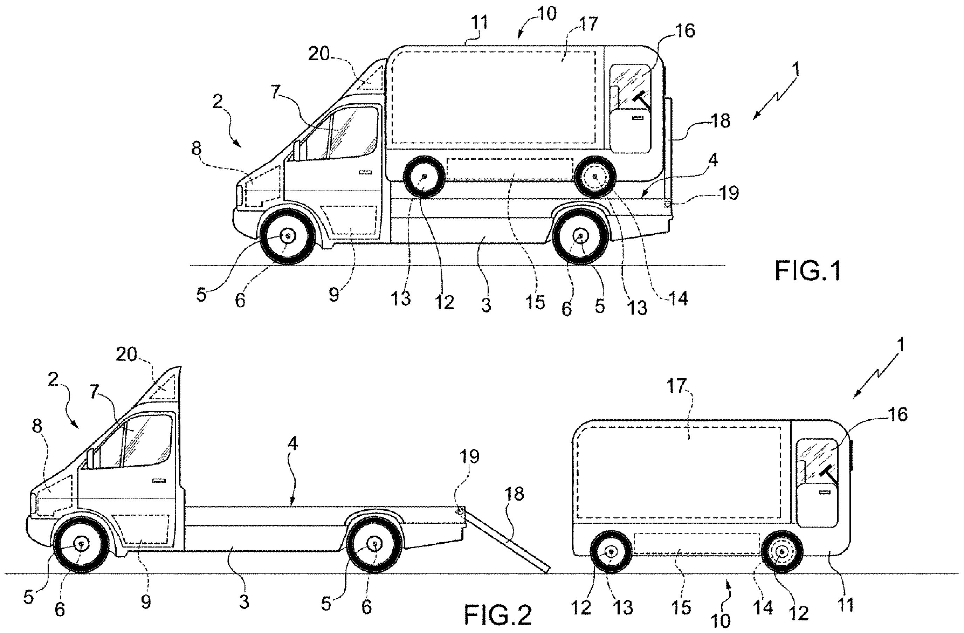

Figures 1 and 2 are two schematic side views of a preferred embodiment of the commercial van according to the present invention.

With reference to Figures 1 and 2, 1 denotes in its entirety a commercial van comprising a first vehicle 2 provided with a support chassis 3 which defines a substantially horizontal load-carrying platform 4, has a pair of axles 5 mounted to rotate about respective axes of rotation 6 substantially parallel to each other and supports a driving cab 7 for a driver.

The vehicle 2 is moved by means of an internal-combustion engine 8 which is mounted on the chassis 3 and is supplied with a fuel stored in a container tank 9 mounted on the said chassis 3.

The commercial van 1 comprises furthermore a second vehicle 10 provided with a support chassis 11 having a pair of axles 12 mounted so as to rotate about respective axes of rotation 13 substantially parallel to each other.

The vehicle 10 is moved by means of an electric motor 14 powered by at least one battery 15 mounted on the chassis 13.

In the case in question, the motor 14 is mounted coaxially with the axis 13 of one of the axles 12. Obviously, according to variants not shown, the motor 14 is mounted on the chassis 11 in different positions and is connected to one of the axles 12 by means of a transmission device.

The chassis 11 supports a driving cab 16 for a driver and a storage compartment 17 for storing products and/or articles to be delivered.

The vehicle 2 has a loading ramp 18 rotatably connected to a rear end of the chassis 3 so as to rotate, under the thrust of an actuating device, known and not shown, about an axis of rotation 19 parallel to the axes 6.

The ramp 18 is movable between a first operating position (Figure 2), in which the ramp 18 is arranged between the platform 4 and the ground so as to allow the vehicle 10 to drive up onto/down from the said platform 4, and a second operating position (Figure 1), in which the ramp 18 is arranged substantially perpendicular to the platform 4 in order to lock the vehicle 10 on the said platform 4.

The vehicle 2 is provided, furthermore, with a charging unit 20 mounted on the chassis 3 for charging the battery 15 powering the electric motor 14.

According to a variant not shown, the cab 16 is eliminated and replaced with an autonomous - namely driverless - driving system comprising an electronic control unit designed to control selectively the electric motor 14, in particular based on a signal from the said device (not shown) for actuating the ramp 18.

According to a further variant not shown, the platform 4 is provided with a plurality of locking wedges movable between an operating position, in which the locking wedges project above the platform 4 so as to lock the vehicle 10, and a rest position, in which the locking wedges extend below the platform 4 in order to allow the vehicle 10 to drive up onto/down from the vehicle 2.

The commercial van 1 has, therefore, a number of advantages mainly due to the fact that the independent nature of the two vehicles 2 and 10 allows the vehicle 2 to be used to transfer the commercial van 1 from one city to another, park the commercial van 1 in peripheral areas of the city and use solely the vehicle 10 in order to perform the deliveries of the products contained in the compartment 17 to central areas of the cities.

## Claims

1. A commercial van comprising a first vehicle (2), which is provided with an internal combustion operating engine (8), supports a holding tank (9) for a fuel, and has a load-carrying platform (4); and **characterized in that** it comprises, furthermore, a second vehicle (10), which is provided with an electric operating motor (14), and has a storage compartment (17) for at least one product; a lifting device (18) being provided in order to allow the second vehicle (10) to get onto/down from the load-carrying platform (4).

2. A commercial van according to claim 1 and comprising, furthermore, a locking device (18), which is movable between a locking position, in which the second vehicle (10) is locked on the load-carrying platform (4), and a release position.

3. A commercial van according to claim 1 or 2, wherein the second vehicle (10) comprises at least one power supply battery (15) for the electric operating motor (14), and wherein the first vehicle (2) comprises a charging device (20) to charge the power supply battery (15) when the second vehicle (10) is arranged on the load-carrying platform (4).

4. A commercial van according to any of the previous claims, wherein the first vehicle (2) comprises, furthermore, a lifting ramp (18), which is movable between a first operating position, in which the lifting ramp (18) is positioned so as to allow the second vehicle (10) to get onto/down from the first vehicle (2), and a second operating position, in which the lifting ramp (18) is positioned so as to lock the second vehicle (10) on the first vehicle (2).

5. A commercial van according to any of the previous claims, wherein the first vehicle (2) is provided with locking wedges, which are movable between an operating position, in which the locking wedges project above the load-carrying platform (4) so as to lock the second vehicle (10), and a rest position, in which the locking wedges extend under the load-carrying platform (4) so as to allow the second vehicle (10) to get onto/down from the first vehicle (2).

6. A commercial van according to any of the previous claims, wherein the second vehicle (10) is provided with a pair of axles (12); the electric operating motor (14) being fitted coaxially to one of the axles (12).

7. A commercial van according to any of the previous claims, wherein the second vehicle (10) comprises, furthermore, a driving compartment (16) for a driver.

8. A commercial van according to any of the claims from 1 to 6, wherein the second vehicle (10) does not have a driver; an electronic control unit being provided so as to selectively control the operation of the electric operating motor (14).

9. A commercial van according to claim 8 and comprising, furthermore, a locking device (18), which is movable between a locking position, in which the second vehicle (10) is locked on the load-carrying platform (4), and a release position; the electronic control unit being designed to selectively control the electric operating motor (14) based on a signal coming from the locking device (18).
